# FASCICULE DE BREVET EUROPEEN

(11) **EP 1 865 224 B1**
(45) Date de publication et mention de la délivrance du brevet: **12.05.2010**
(21) Numéro de dépôt: 07301070.4
(22) Date de dépôt: 29.05.2007
(51) Int. Cl.: F16H 21/14, E05F 15/12, E05F 11/16

(54) **Dispositif de fermeture avec systeme ou dispositif pour la transmission d'un mouvement de rotation d'un premier objet autour d'un premier axe a un second objet autour d'un second axe**
Schliessvorrichtung mit System oder Vorrichtung zur Übertragung einer Drehbewegung eines ersten Gegenstands um eine erste Achse auf einen zweiten Gegenstand um eine zweite Achse
Closing device with system or device for transmitting a rotational movement from a first object about a first axis to a second object about a second axis.

(30) Priorité: 02.06.2006 FR 0652015
(43) Date de publication de la demande: 12.12.2007
(73) Titulaire: BUBENDORFF Société Anonyme, 68220 Attenschwiller (FR)
(72) Inventeur: VALEMBOIS, Guy, F-31700, BLAGNAC (FR)
(74) Mandataire: Rhein, Alain

(56) Documents cités:
- WO-A-01/42608
- DE-A1- 2 422 939
- DE-U1-202005 018 350
- US-A- 2 368 813

## Description

L'invention concerne un dispositif de transmission d'un mouvement de rotation d'un premier objet autour d'un premier axe à un second objet autour d'un second axe, parallèle audit premier axe.

La présente invention concerne le domaine de la fabrication des dispositifs ou systèmes conçus pour transmettre un mouvement entre un premier objet, plus particulièrement constitué par le rotor d'un moteur d'entraînement, et un second objet qu'il convient d'entraîner pour le mouvoir d'une position à une autre, plus particulièrement sous l'impulsion dudit moteur d'entraînement. Cette invention trouvera une application particulièrement adaptée lorsqu'il s'agit d'assurer l'entraînement d'un moyen de fermeture tel que le battant ou le vantail d'un volet, d'un portail ou analogue.

L'on connaît, d'ores et déjà, des dispositifs conçus pour assurer la transmission d'un tel mouvement de rotation. En particulier, il est connu du document FR-2.741.651 un dispositif assurant l'arrêt automatique et la synchronisation des battants motorisés d'un volet. Ce dispositif comporte deux mécanismes situés de chaque côté de l'ouverture qu'il convient de refermer à l'aide des battants de ce volet, ces mécanismes comportant, chacun, un motoréducteur en prise avec une extrémité d'un bras coudé pour l'entraînement en rotation de ce dernier autour d'un premier axe. L'autre extrémité d'un tel bras coudé est rendu solidaire d'un battant du volet par rapport auquel ce bras coudé est monté en rotation autour d'un deuxième axe, parallèle audit premier axe. Ledit battant est, en outre, monté en rotation sur des gonds solidaires de la maçonnerie, ceci autour d'un troisième axe, parallèle aux deux autres axes. Ainsi, le motoréducteur entraîne en rotation, autour du premier axe, le bras coudé qui pivote par rapport au battant autour du deuxième axe et qui entraîne ce battant en rotation autour du troisième axe.

On observera que le bras coudé de ce dispositif doit, pour pouvoir assurer une ouverture et une fermeture complètes du battant, pivoter autour dudit premier axe selon un angle supérieur à 90°, notamment de l'ordre de 120 à 140°. Or, du fait de l'implantation du motoréducteur à l'arrière du battant en position refermée de celui-ci, ce bras coudé, en position de fermeture du battant, s'étend profondément à l'intérieur de l'ouverture refermée par un tel battant ce qui impose de positionner la porte, fenêtre ou analogue refermant cette ouverture à une distance importante par rapport aux battants afin d'autoriser un débattement suffisant de ce bras coudé. Il est clair qu'un tel mode de réalisation peut, uniquement, être envisagé dans le cadre d'une construction dont les murs présentent une forte épaisseur et/ou pour des portes, fenêtres ou analogues venant sensiblement affleurer les parois internes d'un tel mur.

D'autres dispositifs de fermeture avec système de transmission sont connus de WO 01/42608 et DE 20 2005 018 350 U.

La présente invention se veut à même de remédier aux inconvénients des dispositifs de l'état de la technique.

A cet effet, l'invention concerne un dispositif de fermeture avec système pour la transmission d'un mouvement de rotation d'un premier objet autour d'un premier axe à un second objet autour d'un second axe, parallèle audit premier axe, ce système comportant, d'une part, une première platine pivotante autour dudit premier axe et conçue pour être en prise avec ledit premier objet, d'autre part, une seconde platine pivotante autour dudit second axe et conçue pour être en prise avec ledit second objet et, d'autre part encore, au moins trois biellettes. Ce système est caractérisé par le fait que les trois biellettes s'étendent dans trois plans distincts, parallèles entre eux et perpendiculaires aux axes de pivotement des platines, et que chacune des extrémités de ces biellettes est rendue solidaire d'une platine par l'intermédiaire d'un moyen d'articulation.

L'invention concerne, également, un dispositif de fermeture avec un dispositif pour la transmission d'un mouvement de rotation d'un premier objet autour d'un premier axe à un second objet autour d'un second axe, parallèle audit premier axe, ce dispositif comportant au moins un premier et un second système de transmission disposés en série et dont le premier système de transmission est conçu pour être en prise avec ledit premier objet et pour entraîner le second système de transmission, lui-même conçu pour être en prise avec ledit second objet et pour entraîner celui-ci. Ce dispositif est caractérisé par le fait que ces systèmes de transmission comportent, chacun, d'une part, deux platines pivotantes selon deux axes parallèles et dont l'une est en prise avec un objet tandis que l'autre est en prise avec une platine de l'autre système de transmission, et, d'autre part, au moins deux biellettes dont chaque extrémité est montée articulée sur une platine d'un système de transmission par le biais d'un moyen d'articulation.

La présence de trois biellettes dans ce système de transmission permet, avantageusement, d'éviter une configuration dans laquelle les biellettes constituent un parallélogramme plat incapable de transmettre un quelconque mouvement.

En outre, la conception astucieuse de ce système de transmission permet de transmettre, entre deux objets, un mouvement de rotation dont l'angle peut, avantageusement, aller jusqu'à 270°, sans que les différents éléments de ce système interfèrent et bloquent une telle rotation.

Tel qu'évoqué ci-dessus, le dispositif de transmission comporte au moins deux systèmes de transmission en série, incorporant chacun au moins deux biellettes et autorisant un entraînement en rotation d'un objet par un autre. Les systèmes de transmission de ce dispositif peuvent, là encore, être conçus pour éviter la formation d'un parallélogramme plat de sorte que ce dispositif est toujours en mesure de transmettre un mouvement de rotation.

De plus, les systèmes de transmission d'un tel dispositif sont agencés en sorte de pouvoir pivoter l'un par rapport à l'autre et d'adopter, ainsi, une multitude de positions angulaires l'un par rapport à l'autre.

En particulier, ce dispositif de transmission peut adopter une position repliée dans laquelle les deux systèmes de transmission sont sensiblement superposés et adoptent, entre eux, un angle quasi nul. On observera qu'une telle position repliée correspond, dans le cas d'une porte, fenêtre ou analogue, à la position de fermeture d'un battant dans laquelle les deux systèmes de transmission sont sensiblement parallèles à un tel battant et occupent, entre ce battant et la porte ou analogue, un encombrement minimum et singulièrement réduit, plus particulièrement par rapport à un bras coudé d'un dispositif de l'état de la technique tel que susmentionné.

Selon un autre avantage, la conception astucieuse des systèmes de transmission du dispositif de transmission permet de transmettre un mouvement de rotation d'amplitude importante entre deux objets.

Un tel mode de réalisation permet, alors, d'assurer l'ouverture/fermeture d'un battant par pivotement de ce dernier selon un angle d'au moins 180°.

Finalement, l'amplitude importante permet d'envisager, lorsque le battant est dans une position d'ouverture maximale, de forcer la rotation du ou des systèmes de transmission de manière à provoquer le verrouillage de ce battant en position d'ouverture.

D'autres buts et avantages de la présente invention apparaîtront au cours de la description qui va suivre se rapportant à des modes de réalisation qui ne sont donnés qu'à titre d'exemples indicatifs et non limitatifs.

La compréhension de cette description sera facilitée en se référant aux dessins joints en annexe et dans lesquels :
- la figure 1 est une vue schématisée et en perspective d'un système de transmission conforme à l'invention et représenté dans une première position extrême ;
- les figures 2 et 3 sont des vues similaires à la figure 1 et correspondent à ce même système de transmission dans deux positions intermédiaires atteintes par rotation des platines du système à partir de ladite première position extrême de la figure 1 ;
- la figure 4 est une vue similaire aux figures 1 à 3 et correspond au système de transmission dans une seconde position extrême atteinte par rotation à partir des positions des figures 2, puis 3 ;
- la figure 5 est une vue schématisée et en perspective d'un dispositif de transmission conforme à la présente invention et utilisé pour l'entraînement en rotation d'un battant ;
- la figure 6 est une vue schématisée et en perspective correspondant à un détail du dispositif illustré figure 5 ;
- les figures 7 et 8 sont des vues schématisées et en perspective, selon deux angles différents, du dispositif illustré figure 5 ;
- les figures 9 à 12 sont des vues schématisées, en détail et de dessus, d'un dispositif de transmission dans différentes positions d'ouverture du battant illustré figure 5.

La présente invention concerne le domaine de la fabrication des dispositifs ou systèmes conçus pour transmettre un mouvement de rotation adopté par un premier objet à un second objet.

Selon un premier aspect de la présente invention, celle-ci concerne un système 1 pour la transmission d'un mouvement de rotation adopté par un premier objet 2 autour d'un premier axe 3 à un second objet 4 autour d'un second axe 5, parallèle audit premier axe 3.

Le premier objet 2 est constitué par le rotor 6 d'un moteur 7 d'entraînement.

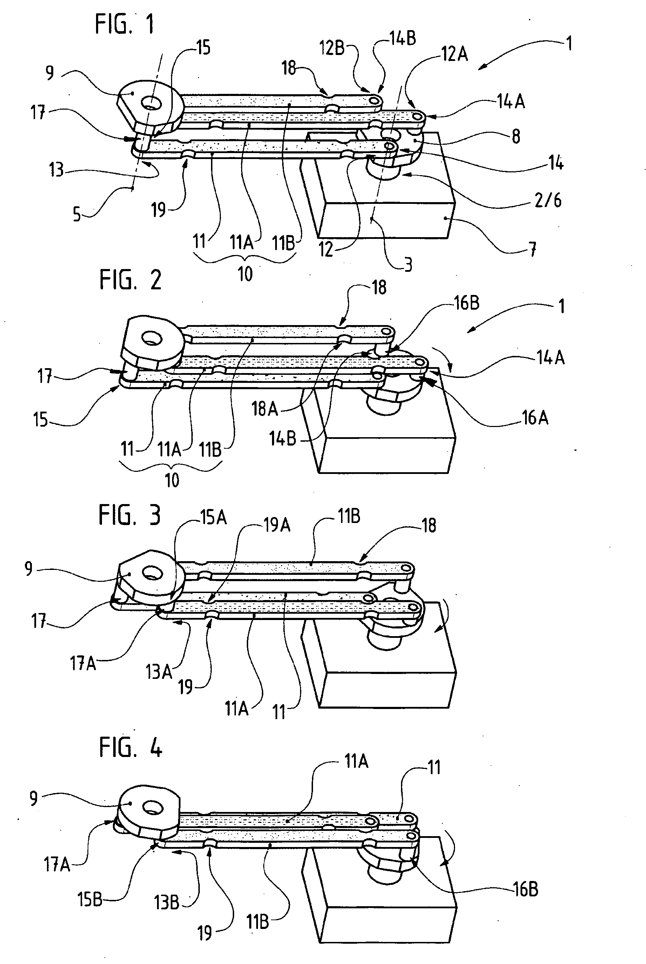

En fait et tel que visible sur les figures 1 à 4, un tel système 1 de transmission comporte, d'une part, une première platine 8 conçue pour pivoter autour d'un axe.

Cette première platine 8 est destinée à être rendue solidaire dudit premier objet 2 et est conçue pour être en prise avec celui-ci 2 afin de pouvoir être entraînée en rotation, par ce premier objet 2, autour dudit premier axe de rotation 3 pour un pivotement autour de cet axe 3.

Ce système 1 de transmission comporte, d'autre part, une seconde platine 9 conçue pour pivoter autour d'un axe, autre que celui autour duquel pivote ladite première platine 8.

Cette seconde platine 9 est, quant à elle, destinée à être rendue solidaire dudit second objet 4 et est conçue pour être en prise avec celui-ci 4 afin de pouvoir entraîner en rotation ce second objet 4, ceci autour dudit second axe de rotation 5 autour duquel pivote, alors également, cette seconde platine 9.

Ce système 1 de transmission comporte, d'autre part encore, des moyens 10 de raccordement des deux platines 8 ; 9 conçus pour transmettre le mouvement de rotation d'une platine 8 à l'autre 9.

Selon un mode de réalisation préféré de l'invention illustré figures 1 à 4, ces moyens de raccordement 10 sont constitués par au moins trois biellettes (11 ; 11A ; 11B) présentant, chacune, deux extrémités (12, 13 ; 12A, 13A ; 12B, 13B), dont l'une (12 ; 12A ; 12B) est rendue solidaire de la première platine 8 tandis que l'autre (13 ; 13A ; 13B) est rendue solidaire de la seconde platine 9.

Un tel mode de réalisation permet, avantageusement, de remédier à un éventuel inconvénient d'un système 1 à deux biellettes (11, 11A) et consistant en ce que, dans certaines positions des platines (8, 9), ces deux biellettes (11, 11A) forment un parallélogramme plat. Dans ces positions, le système 1 est incapable de transmettre un quelconque mouvement d'une platine 8 à l'autre 9.

Selon une autre caractéristique de l'invention, chaque extrémité (12 ; 13) d'une biellette 11 est rendue solidaire d'une platine (8 ; 9) par l'intermédiaire d'un moyen d'articulation (14 ; 15) d'une telle biellette 11 sur une telle platine (8 ; 9). De tels moyens d'articulation (14 ; 15) autorisent, en fait, une rotation d'une telle biellette 11 par rapport à une telle platine (8 ; 9), ceci selon un axe parallèle à l'axe (3 ; 5) de rotation de cette platine (8 ; 9).

A ce propos, on observera que les moyens d'articulation (14 ; 15) des biellettes 11 sur une telle platine (8 ; 9) sont implantés, au niveau de cette platine (8 ; 9), de manière régulière, notamment de manière équiangulaire par rapport à l'axe de pivotement (3 ; 5) d'une telle platine (8 ; 9).

Dans le cas particulier d'un système 1 à trois biellettes 11, les moyens d'articulation (14 ; 15) de ces trois biellettes 11 sont implantés, au niveau d'une même platine (8 ; 9), à 120° les uns des autres par rapport audit axe de pivotement (3 ; 5) d'une telle platine (8 ; 9).

Une caractéristique additionnelle de l'invention consiste en ce que le système 1 de transmission est conçu en sorte que lesdites biellettes 11 puissent, lors de la rotation des platines (8 ; 9), se déplacer les unes par rapport aux autres sans jamais entrer en contact entre elles, ceci pour une grande amplitude de rotation des platines (8, 9).

Pour ce faire, les biellettes 11 du système de transmission 1 s'étendent, chacune, dans un plan. Ces plans sont, en fait, parallèles entre eux mais, également, perpendiculaires aux axes (3 ; 5) de pivotement des platines (8 ; 9).

De plus, ces biellettes 11 sont implantées au sein dudit système 1 de transmission en sorte d'être espacées les unes des autres, notamment lorsque, par rotation des platines (8 ; 9), ces biellettes 11 viennent se superposer.

Pour ce faire, le système 1 de transmission comporte au moins un moyen (16 ; 17) pour assurer le positionnement d'au moins une telle biellette 11 (plus particulièrement de l'extrémité 12, 13 d'une telle biellette 11) à une distance déterminée d'au moins une telle platine (8 ; 9), ceci dans une direction perpendiculaire à la surface d'une telle platine (8 ; 9) et en sorte que lesdites biellettes 11 n'entrent jamais en contact les unes avec les autres lors de la rotation des platines (8 ; 9).

Ainsi et dans le cas particulier d'un système de transmission 1 à deux biellettes 11, ce système 1 comporte au moins un moyen pour positionner une biellette à une distance déterminée d'une platine correspondant au moins à l'épaisseur de l'autre biellette.

Dans le cas particulier d'un système de transmission 1 à au moins trois biellettes (11, 11A, 11B), ce système 1 comporte des moyens (16 ; 17) pour positionner au moins une biellette (11, 11A, 11B) à une distance déterminée d'une platine (8 ; 9) correspondant au moins à l'épaisseur, soit d'une autre biellette, soit des plusieurs autres biellettes.

Ainsi et dans le cas particulier d'un système 1 de transmission comportant trois biellettes (11, 11A, 11B), ce système 1 comporte des moyens (16 ; 17) pour positionner deux biellettes (11A, 11B ; 11, 11A) à une distance déterminée d'une platine (8 ; 9) correspondant au moins à l'épaisseur, soit d'une autre biellette (11 ; 11B), soit des deux autres biellettes (11, 11A ; 11A, 11B).

Une telle configuration a été représentée figures 1 à 4 dans lesquelles :
- la première biellette 11 est rendue directement solidaire de la platine 8 par l'intermédiaire d'un moyen d'articulation 14 (cette première biellette 11 étant, alors, positionnée à proximité immédiate de ladite platine 8) ;
- la seconde biellette 11A est rendue solidaire de la platine 8 par l'intermédiaire d'un moyen de positionnement 16A dont la hauteur est supérieure à l'épaisseur de la première biellette 11 ;
- la troisième biellette 11B est rendue solidaire de ladite platine 8 par l'intermédiaire d'un moyen de positionnement 16B dont la hauteur est supérieure à l'épaisseur cumulée des première et deuxième biellettes 11, 11A.

Selon un mode de réalisation préféré de l'invention, le moyen de positionnement (16 ; 17) d'une biellette 11 par rapport à une platine (8 ; 9) constitue, au moins en partie, le moyen d'articulation (14 ; 15) d'une telle biellette 11 sur cette platine (8 ; 9).

Un tel moyen (16 ; 17) de positionnement peut être constitué par un plot ou analogue, monté articulé sur la platine (8 ; 9) et/ou sur lequel est montée articulée l'extrémité (12 ; 13) d'une biellette 11.

Un tel plot présente, alors, une hauteur qui est supérieure, soit à l'épaisseur d'une biellette (notamment pour le positionnement de la seconde biellette 11A sur la première platine 8 ou sur la seconde platine 9), soit à l'épaisseur cumulée de plusieurs biellettes (notamment pour le positionnement de la troisième biellette 11B sur cette première platine 8 ou de la première biellette 11 sur la seconde platine 9).

Selon une autre caractéristique de l'invention, au moins une partie des biellettes 11 comporte au moins un logement (18 ; 19) pour la réception d'un moyen de positionnement (16 ; 17) associé à au moins une autre biellette (11A, 11B).

C'est, plus particulièrement, à l'intérieur d'un tel logement (18 ; 19) que vient s'engager un moyen de positionnement (16 ; 17) dans une position extrême de la rotation d'une platine (8 ; 9) dans laquelle le moyen de positionnement (16B ; 17) d'une biellette (11B ; 11) vient en butée contre une autre biellette (11A ; 11B) comme visible figures 1 et 4.

Un tel mode de réalisation permet, avantageusement, d'augmenter l'amplitude de la rotation des platines (8 ; 9) entre ces deux positions extrêmes (figures 1 et 4).

Un mode préféré de réalisation consiste en ce que les biellettes 11 présentent au moins deux logements (18, 18A ; 19, 19A) ménagés de manière symétrique par rapport à l'axe d'extension d'une telle biellette 11.

En fait, de tels logements (18 ; 19) sont ménagés à proximité d'au moins une extrémité (12 ; 13) d'une telle biellette 11, voire (et de préférence comme visible figures 1 à 4) à proximité de chacune des deux extrémités (12 ; 13) d'une telle biellette 11, facilitant, ainsi, la fabrication et la mise en place d'une telle biellette 11.

Tel qu'évoqué ci-dessus, le système de transmission 1 comporte deux platines (8 ; 9) auxquelles sont raccordées lesdites biellettes 11.

Selon un mode de réalisation non représenté, ces deux platines (8 ; 9) peuvent se situer d'un même côté de l'ensemble des plans dans lesquels s'étendent les biellettes (11, 11A, 11B).

Cependant et selon un mode de réalisation préféré de l'invention illustré figures 1 à 4, ces platines (8 ; 9) sont disposées de part et d'autre de l'ensemble des plans dans lesquels s'étendent ces biellettes (11, 11A, 11B).

Un tel mode de réalisation permet, là encore, d'augmenter l'amplitude de la rotation des platines (8 ; 9) entre les deux positions extrêmes (figures 1 et 4). Cette amplitude est, alors, de l'ordre de 270° sans que les différentes pièces (biellettes, moyens de positionnement, moyens d'articulation) du système 1 de transmission interfèrent.

Il a été représenté figures 1 à 4 un système 1 de transmission comportant trois biellettes (11, 11A, 11B) adoptant une telle configuration et dont :
- la troisième biellette 11B est rendue directement solidaire de la platine 9 par l'intermédiaire d'un moyen d'articulation 15B (cette troisième biellette 11B étant, alors, positionnée à proximité immédiate de ladite platine 9) ;
- la seconde biellette 11A est rendue solidaire de la platine 9 par l'intermédiaire d'un moyen de positionnement 17A dont la hauteur est supérieure à l'épaisseur de la troisième biellette 11B ;
- la première biellette 11 est rendue solidaire de ladite platine 9 par l'intermédiaire d'un moyen de positionnement 17 dont la hauteur est supérieure à l'épaisseur cumulée des deuxième et troisième biellettes (11A, 11B).

Un tel système 1 de transmission est appliqué :
- à l'ouverture/fermeture d'un battant de volet de porte, fenêtre ou analogue ;
- à l'ouverture/fermeture d'un vantail de portail, de porte, fenêtre ou analogue ;

La présente invention concerne, donc un dispositif de fermeture comportant, d'une part, un tel battant, un tel vantail ou analogue monté en rotation sur un support, notamment une maçonnerie ou analogue.

Un tel dispositif de fermeture comporte, d'autre part, un moteur 7 pour la commande d'ouverture et/ou de fermeture d'un tel vantail, battant ou analogue. Ce moteur 7 comporte un rotor 6 constituant ledit premier objet 2 susmentionné.

Ce dispositif de fermeture comporte, également, un système 1 de transmission du type susmentionné et conçu pour entraîner en rotation ledit battant, vantail ou analogue.

Ce système de transmission 1 est, alors, en prise avec ledit second objet 4 qui, en l'espèce, est constitué par le vantail, le battant ou analogue, voire par un élément y associé.

Selon un second aspect de la présente invention, celle-ci concerne un dispositif de fermeture avec un dispositif 20 pour la transmission d'un mouvement de rotation d'un premier objet 2 autour d'un premier axe 3 à un second objet 4 autour d'un second axe 5, parallèle audit premier axe 3.

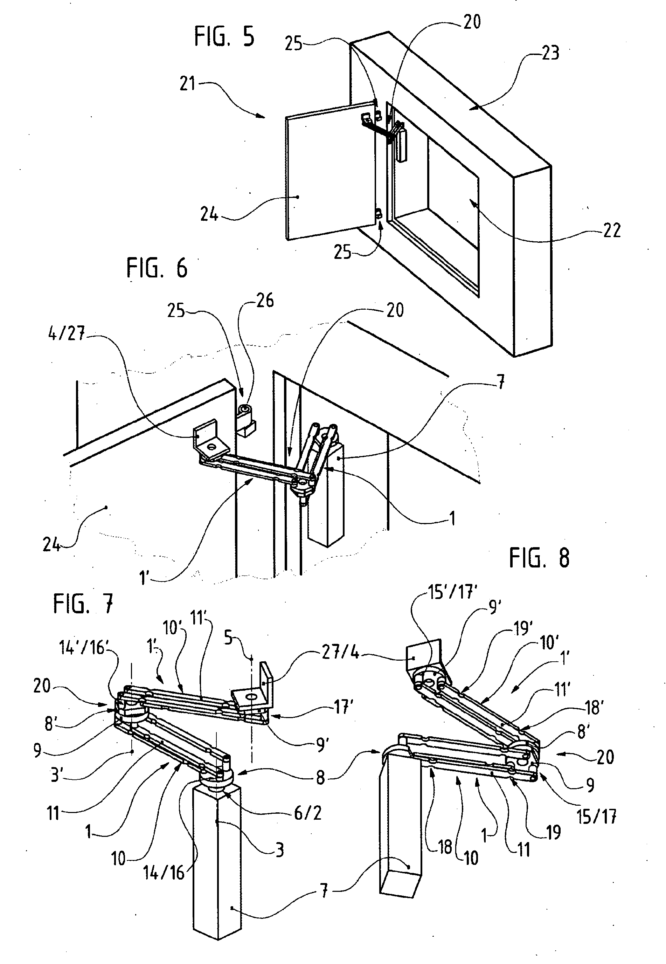

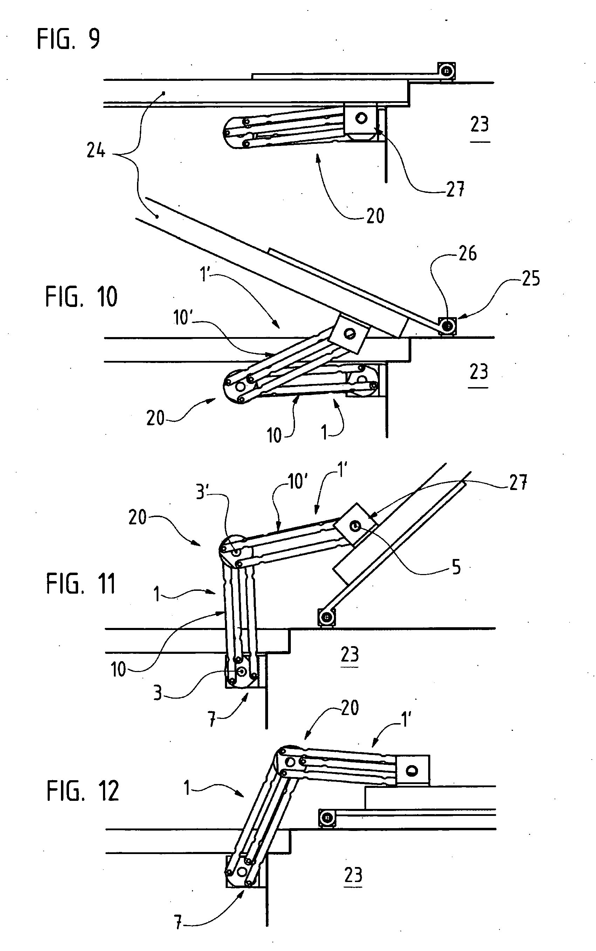

Tel que visible sur les figures 5 à 12, ce dispositif 20 comporte au moins un premier 1 et un second 1' système de transmission disposés en série, l'un au moins (mais de préférence les deux) de ces systèmes de transmission 1, 1' présentant les caractéristiques susmentionnées.

En fait, dans un tel dispositif 20, le premier système 1 de transmission est conçu pour être en prise avec ledit premier objet 2 et pour entraîner une partie au moins du second système 1' de transmission, plus particulièrement en rotation, qui lui-même 1' est conçu pour être en prise avec le second objet 4 et pour entraîner celui-ci 4, plus particulièrement en rotation.

A ce propos, on observera que ce premier système 1 de transmission comporte deux platines (8 ; 9) dont, d'une part, une première platine 8 destinée à être rendue solidaire dudit premier objet 2 et conçue pour être en prise avec celui-ci 2 pour être entraînée en rotation, par ce premier objet 2, autour dudit premier axe de rotation 3 et, d'autre part, une seconde platine 9 raccordée à ladite première platine 8 par l'intermédiaire de moyens de raccordement 10 conçus pour entraîner cette seconde platine 9 en rotation autour d'un axe 3', parallèle audit premier axe de rotation 3.

En ce qui concerne ledit second système 1' de transmission, celui-ci comporte, d'une part, une première platine 8' rendue solidaire de la seconde platine 9 du premier système 1 de transmission et conçue pour être entraînée en rotation, autour de l'axe de rotation 3' de cette seconde platine 9, par cette dernière 9 et, d'autre part, une seconde platine 9' raccordée à ladite première platine 8' de ce second système 1' de transmission par l'intermédiaire de moyens de raccordement 10' conçus pour entraîner cette seconde platine 9' en rotation autour d'un axe 5, parallèle audit axe de rotation 3' de la première platine 8'. Cette seconde platine 9' est destinée à être rendue solidaire dudit second objet 4 et est conçue pour être en prise avec celui-ci 4 afin de pouvoir l'entraîner en rotation autour dudit second axe de rotation 5.

En ce qui concerne les moyens de raccordement (10 ; 10'), ceux-ci sont constitués par au moins deux biellettes (par exemple deux biellettes judicieusement implantées au niveau des platines, plus particulièrement en sorte d'éviter, par rotation, la formation d'un parallélogramme plat).

Cependant et selon un mode de réalisation préféré de l'invention, ces moyens de raccordement (10 ; 10') sont constitués, pour l'un au moins de ces systèmes (1 ; 1') de transmission (voire et de préférence pour les deux systèmes 1 ; 1' tel qu'illustré figures 5 à 12), par au moins trois biellettes (11; 11').

Selon une autre caractéristique de ce dispositif 20, les biellettes 11 de l'un au moins des systèmes (1, 1') de transmission (de préférence, les biellettes 11, 11' de chacun des deux systèmes 1, 1' de transmission du dispositif 20) s'étendent dans des plans parallèles entre eux et perpendiculaires aux axes de pivotement des platines (8, 9 ; 8', 9) de ce ou ces systèmes (1, 1') de transmission.

Une caractéristique additionnelle consiste en ce que ce dispositif 20 comporte au moins un moyen (16, 17 ; 16', 17') pour assurer le positionnement d'au moins une biellette (11 ; 11') d'au moins un système (1 ; 1') de transmission à une distance déterminée d'au moins une platine (8, 9 ; 8', 9') de ce système (1 ; 1'), ceci dans une direction perpendiculaire à la surface d'une telle platine (8, 9 ; 8', 9'), cette distance correspondant au moins à l'épaisseur d'une ou plusieurs autres biellettes de ce système (1 ; 1') de transmission.

Un mode préféré de réalisation consiste en ce que chacun des deux systèmes (1 ; 1') comporte au moins un tel moyen de positionnement (16, 17 ; 16', 17') d'une biellette (dans le cas d'un système 1 ; 1' à deux biellettes) ou de plusieurs biellettes (dans le cas d'un système 1 ; 1' à au moins trois biellettes).

Un tel moyen de positionnement (16, 16', 17, 17') présente une partie au moins des caractéristiques susmentionnées.

Ainsi un tel moyen de positionnement (16, 16', 17, 17') peut constituer, au moins en partie, un moyen d'articulation (14, 15 ; 14', 15') d'une telle biellette (11; 11') sur une platine (8, 9; 8', 9').

De plus, un tel moyen de positionnement (16, 16', 17, 17') peut être constitué par un plot ou analogue, monté articulé sur une platine (8, 8', 9, 9') et/ou sur lequel est montée articulée l'extrémité d'une biellette (11, 11').

Une autre caractéristique consiste en ce qu'une partie au moins des biellettes (11 ; 11') d'au moins un système de transmission (1 ; 1') comporte au moins un logement (18 , 19 ; 18', 19') pour la réception d'un moyen de positionnement (16, 17 ; 16', 17'), ceci dans une position extrême de la rotation d'une platine (8, 9 ; 8', 9') dans laquelle le moyen de positionnement (16, 17 ; 16', 17') d'une biellette (11 ; 11') vient en butée contre une autre biellette.

Un mode particulier de réalisation consiste en ce que chacune des biellettes (11 ; 11') des deux systèmes de transmission (1 ; 1') comporte des logements (18, 19 ; 18', 19') présentant les caractéristiques susmentionnées.

Une caractéristique additionnelle consiste en ce que, pour au moins un système de transmission (1 ; 1'), les moyens d'articulation (14, 15 ; 14', 15') des biellettes (11, 11') sur une platine (8, 9 ; 8', 9') sont implantés, au niveau de cette platine (8, 9 ; 8', 9'), de manière régulière, notamment de manière équiangulaire par rapport à l'axe de pivotement (3, 3', 5) d'une telle platine (8, 9 ; 8', 9').

En fait, le dispositif de transmission 20 comporte, de préférence, une telle implantation pour les deux systèmes de transmission (1, 1').

Dans le cas particulier d'un système (1 ; 1') à trois biellettes 11, les moyens d'articulation (14, 15 ; 14', 15') de ces trois biellettes (11 ; 11') sont implantés, au niveau d'une même platine (8, 9 ; 8', 9'), à 120° les uns des autres par rapport audit axe de pivotement (3, 3', 5) d'une telle platine (8, 9 ; 8', 9').

Selon un mode de réalisation non représenté, les deux platines (8, 9 ; 8', 9') de l'un au moins des systèmes de transmission (1, 1') peuvent se situer d'un même côté de l'ensemble des plans dans lesquels s'étendent les biellettes (11 ; 11').

Cependant et selon un mode de réalisation préféré, les platines (8, 9 ; 8', 9') d'au moins un système (1 ; 1') de transmission (voire et de préférence de ces deux systèmes 1 ; 1' de transmission) sont disposées de part et d'autre de l'ensemble des plans dans lesquels s'étendent les biellettes (11 ; 11') d'un tel système de transmission (1 ; 1').

Là encore, un tel mode de réalisation permet une amplitude de rotation des platines (8, 9 ; 8', 9') de l'ordre de 270° tel qu'évoqué ci-dessus.

Il a été représenté figures 5 à 12, un dispositif de fermeture selon un mode de réalisation de l'invention constitué par volet 21 équipant une construction et conçu pour assurer la fermeture d'une ouverture 22 ménagée au niveau de la maçonnerie 23 de cette construction. Un tel volet 21 peut être associé à une porte, à une fenêtre ou analogue.

Un tel volet 21 comporte au moins un battant 24 (voire deux battants 24) rendu solidaire de la construction par le biais de gonds 25 solidaires de la maçonnerie 23 et sur lesquels un tel battant 24 est monté en rotation autour d'un axe 26.

Un tel volet 21 est complété, pour son ouverture et sa fermeture, par un dispositif 20 pour la transmission d'un mouvement de rotation d'un premier objet 2 autour d'un premier axe 3 à un second objet 4 autour d'un second axe 5, parallèle audit premier axe 3.

A ce propos, on observera que ledit premier objet 2 est constitué par le rotor 6 que comporte un moteur 7 (notamment de type électrique) rendu solidaire de la maçonnerie 23 et qui est rendu solidaire de la première platine 8 du premier système 1 de transmission.

Le second objet 4 est constitué par une embase 27 rendue solidaire, d'une part, de la seconde platine 9' du second système 1' de transmission et, d'autre part, d'un battant 24 du volet 21.

Tel que visible sur les figures 5 à 12, le battant 24, entraîné en rotation par le dispositif 20 de transmission, adopte un mouvement de rotation d'une amplitude de 180°, ce qui est, également, le cas de l'embase 27 (premier objet 4) et du rotor 6 (second objet 2) ainsi que, par conséquent, des platines (8, 9 ; 8', 9') des deux systèmes (1 ; 1') de transmission.

Or, tel que mentionné ci-dessus, un tel système de transmission (1, 1') est susceptible de transmettre un mouvement de rotation d'une amplitude de 270°. Cette particularité peut, en fait, être mise à profit pour entraîner en rotation le dispositif 20 de transmission au-delà des positions correspondant aux positions d'ouverture et/ou de fermeture du ou des battants 24.

Un tel entraînement permet, avantageusement, de réaliser un verrouillage d'un battant 24 en position d'ouverture et/ou de fermeture de celui-ci 24.

Selon un autre exemple de réalisation non représenté, le dispositif 20 de transmission peut, également, entrer dans la composition d'un autre type de dispositif de fermeture, notamment constitué par un vantail de portail, de porte, de fenêtre ou analogue. Là encore, un tel vantail est monté en rotation sur un support comme une maçonnerie ou analogue. Dans un pareil cas, la cinématique d'un tel vantail (entraîné par un tel dispositif 20 de transmission) est similaire, voire identique, à celle d'un battant 24 de type susmentionné.

La présente invention concerne, donc un dispositif de fermeture comportant, d'une part, un tel battant 24, un tel vantail ou analogue monté en rotation sur un support, notamment une maçonnerie ou analogue.

Un tel dispositif de fermeture comporte, d'autre part, un moteur 7 pour la commande d'ouverture et/ou de fermeture d'un tel vantail, battant ou analogue. Ce moteur 7 comporte un rotor 6 constituant ledit premier objet 2 susmentionné.

Ce dispositif de fermeture comporte, également, un dispositif 20 de transmission du type susmentionné et conçu pour entraîner en rotation ledit battant, vantail ou analogue.

Le dispositif de transmission 20 est, alors, en prise avec un second objet 4 qui, en l'espèce, est constitué par le vantail, le battant ou analogue, voire par un élément y associé.

## Revendications

1. Dispositif de fermeture comportant :
- un battant (24), un vantail ou analogue monté en rotation sur un support, notamment une maçonnerie (23) ou analogue ;
- un moteur (7) pour la commande d'ouverture et/ou de fermeture d'un tel battant, vantail ou analogue, ce moteur (7) comportant un rotor (6) constituant un premier objet (2) ;
- un second objet (4) constitué par le battant (24), le vantail ou analogue, voire par un élément y associé ;
- un système de transmission (1) conçu pour entraîner en rotation ledit battant (24), vantail ou analogue et pour transmettre un mouvement de rotation du premier objet (2) autour d'un premier axe (3) au second objet (4) autour d'un second axe (5), parallèle audit premier axe (3) ;
**caractérisé par le fait que** le système (1) de transmission comporte, d'une part, une première platine (8) pivotante autour dudit premier axe (3) et conçue pour être en prise avec ledit premier objet (2), d'autre part, une seconde platine (9) pivotante autour dudit second axe (5) et conçue pour être en prise avec ledit second objet (4) et, d'autre part encore, au moins trois biellettes (11, 11A, 11B) s'étendant dans trois plans distincts, parallèles entre eux et perpendiculaires aux axes de pivotement (3; 5) des platines (8; 9), et que chacune des extrémités (12, 12A, 12B; 13, 13A, 13B) de ces biellettes (11, 11A, 11B) est rendue solidaire d'une platine (8; 9) par l'intermédiaire d'un moyen d'articulation (14, 14A, 14B; 15, 15A, 15B).

2. Dispositif de fermeture selon la revendication 1,
**caractérisé par le fait qu'**il comporte au moins un moyen (16; 17) pour assurer le positionnement d'au moins une biellette (11, 11A, 11B) à une distance déterminée d'une platine (8; 9) correspondant au moins à l'épaisseur d'une ou plusieurs autres biellettes.

3. Dispositif de fermeture selon la revendication 2,
**caractérisé par** le fait le moyen (16; 17) de positionnement d'une biellette (11, 11A, 11B) par rapport à une platine (8; 9) constitue, au moins en partie, un moyen d'articulation (14; 15) d'une telle biellette (11, 11A, 11B) sur cette platine (8; 9).

4. Dispositif de fermeture selon l'une quelconque des revendications 2 ou 3, **caractérisé par le fait qu'**un moyen de positionnement (16; 17) est constitué par un plot ou analogue, monté articulé sur une platine (8; 9) et/ou sur lequel est montée articulée l'extrémité (12; 13) d'une biellette (11, 11A, 11B).

5. Dispositif de fermeture selon l'une quelconque des revendications précédentes, **caractérisé par le fait qu'**une partie au moins des biellettes (11, 11A, 11B) comporte au moins un logement (18; 19) pour la réception d'un moyen de positionnement (16; 17) d'une autre biellette (11, 11A, 11B) par rapport à une platine (8; 9), ceci dans une position extrême de la rotation d'une platine (8; 9) dans laquelle le moyen de positionnement (16; 17) d'une biellette (11, 11A, 11B) vient en butée contre une autre biellette (11, 11A, 11B).

6. Dispositif de fermeture selon l'une quelconque des revendications précédentes, **caractérisé par le fait que** les moyens d'articulation (14; 15) des biellettes (11) sur une platine (8; 9) sont implantés, au niveau de cette platine (8; 9), de manière régulière, notamment de manière équiangulaire par rapport à l'axe (3; 5) de pivotement d'une telle platine (8; 9).

7. Dispositif de fermeture selon la revendication 6, **caractérisé par le fait que** les moyens d'articulation (14; 15) d'un système (1) de transmission à trois biellettes (11, 11A, 11B) sont implantés, au niveau d'une platine (8; 9), à 120° les uns des autres par rapport à l'axe de pivotement (3; 5) d'une telle platine (8; 9).

8. Dispositif de fermeture selon l'une quelconque des revendications précédentes, **caractérisé par le fait que** les platines (8; 9) sont disposées de part et d'autre de l'ensemble des plans dans lesquels s'étendent les biellettes (11, 11A, 11B).

9. Dispositif de fermeture comportant :
- un battant (24), un vantail ou analogue monté en rotation sur un support, notamment une maçonnerie (23) ou analogue ;
- un moteur (7) pour la commande d'ouverture et/ou de fermeture d'un tel battant, vantail ou analogue, ce moteur (7) comportant un rotor (6) constituant un premier objet (2) ;
- un second objet (4) constitué par le battant (24), le vantail ou analogue, voire par un élément y associé ;
- un dispositif (20) de transmission conçu pour entraîner en rotation ledit battant (24), vantail ou analogue et pour transmettre un mouvement de rotation du premier objet (2) autour d'un premier axe (3) au second objet (4) autour d'un second axe (5), parallèle audit premier axe (3)
**caractérisé par le fait que** :
- le dispositif (20) de transmission comporte au moins un premier (1) et un second (1') système de transmission disposés en série et dont le premier système de transmission (1) est conçu pour être en prise avec ledit premier objet (2) et pour entraîner le second système de transmission (1'), lui-même conçu pour être en prise avec ledit second objet (4) et pour entraîner celui-ci ;
- ces systèmes de transmission (1; 1') comportent, chacun, d'une part, deux platines pivotantes (8, 9; 8', 9') selon deux axes parallèles (3, 3'; 3', 5) et dont l'une (8; 9') est en prise avec un objet (2; 4) tandis que l'autre (9; 8') est en prise avec une platine (8'; 9) de l'autre système de transmission (1'; 1), et, d'autre part, au moins deux biellettes (11; 11') dont chaque extrémité est montée articulée sur une platine (8, 9; 8', 9') d'un système de transmission (1; 1') par le biais d'un moyen d'articulation (14, 15; 14', 15').

10. Dispositif de fermeture avec dispositif (20) de transmission selon la revendication 9,
**caractérisé par le fait que** les biellettes (11; 11') de l'un au moins des systèmes de transmission (1; 1') s'étendent dans des plans parallèles entre eux et perpendiculaires aux axes de pivotement (3, 3'; 3', 5) des platines (8, 9; 8', 9') de ce système de transmission (1, 1').

11. Dispositif de fermeture avec dispositif (20) de transmission selon l'une quelconque des revendications 9 ou 10, **caractérisé par le fait qu'**il comporte au moins un moyen (16, 17; 16', 17') pour assurer le positionnement d'au moins une biellette (11; 11') d'au moins un système de transmission (1; 1') à une distance déterminée d'au moins une platine (8, 9; 8', 9') de ce système (1; 1'), ceci dans une direction perpendiculaire à la surface d'une telle platine (8, 9; 8' , 9'), cette distance correspondant au moins à l'épaisseur d'une ou plusieurs autres biellettes de ce système de transmission (1; 1').

12. Dispositif de fermeture avec dispositif (20) de transmission selon la revendication 11,
**caractérisé par le fait que** le moyen de positionnement (16, 17; 16', 17') d'une biellette (11; 11') par rapport à une platine (8, 9; 8', 9') constitue, au moins en partie, un moyen d'articulation (14, 15 ; 14', 15') d'une telle biellette (11; 11') sur cette platine (8, 9; 8', 9').

13. Dispositif de fermeture avec dispositif (20) de transmission selon l'une quelconque des revendications 11 ou 12, **caractérisé par le fait qu'**un moyen de positionnement (16, 17; 16', 17') est constitué par un plot ou analogue, monté articulé sur une platine (8, 9; 8', 9') et/ou sur lequel est montée articulée l'extrémité d'une biellette (11; 11').

14. Dispositif de fermeture avec dispositif (20) de transmission selon l'une quelconque des revendications 11 à 13, **caractérisé par le fait qu'**une partie au moins des biellettes (11; 11') d'au moins un système de transmission (1; 1') comporte au moins un logement (18, 19; 18', 19') pour la réception d'un moyen de positionnement (16, 17; 16', 17'), ceci dans une position extrême de la rotation d'une platine (8, 9; 8', 9') dans laquelle le moyen de positionnement (16, 17; 16', 17') d'une biellette (11; 11') vient en butée contre une autre biellette.

15. Dispositif de fermeture avec dispositif (20) de transmission selon l'une quelconque des revendications 9 à 14, **caractérisé par le fait que**, pour au moins un système de transmission (1; 1'), les moyens d'articulation (14, 15 ; 14', 15') des biellettes (11; 11') sur une platine (8, 9; 8', 9') sont implantés, au niveau de cette platine (8, 9; 8', 9'), de manière régulière, notamment de manière équiangulaire par rapport à l'axe de pivotement (3, 3'; 3', 5) d'une telle platine (8, 9; 8', 9').

16. Dispositif de fermeture avec dispositif (20) de transmission selon l'une quelconque des revendications 9 à 15, **caractérisé par le fait que** l'un au moins des systèmes de transmission (1; 1') comporte trois biellettes (11; 11') s'étendant dans trois plans parallèles distincts et perpendiculaires aux axes de pivotement (3, 3'; 3', 5) des platines (8, 9; 8', 9') d'un tel système de transmission (1; 1').

17. Dispositif de fermeture avec dispositif (20) de transmission selon l'une quelconque des revendications 9 à 16, **caractérisé par le fait que** les platines (8, 9; 8', 9') d'au moins un système de transmission (1; 1') sont disposées de part et d'autre de l'ensemble des plans dans lesquels s'étendent les biellettes (11; 11') d'un tel système de transmission (1; 1').

## Claims

1. Closing device, including :
- a leaf (24) or the like rotationally mounted on a support, namely a masonry (23) or the like ;
- a motor (7) for controlling the opening and/or closing of such a leaf or the like, this motor (7) including a rotor (6) constituting a first object (2) ;
- a second object (4) constituted by the leaf (24) or the like, even by an element associated to same;
- a transmission system (1) designed to rotationally drive said leaf (24) or the like and to transmit a rotational movement of the first object (2) about a first axis (3) to the second object (4) about a second axis (5), parallel to said first axis (3) ;
wherein the transmission system (1) includes, on the one hand, a first plate (8) pivoting about said first axis (3) and designed to engage with said first object (2), on the other hand, a second plate (9) pivoting about said second axis (5) and designed to engage with said second object (4) and, yet on the other hand, at least three rods (11, 11A, 11B) extending in three different planes parallel to each other and perpendicular to the axes of pivoting (3; 5) of the plates (8; 9), and each of the ends (12, 12A, 12B; 13, 13A, 13B) of these rods (11, 11A, 11B) is made integral with a plate (8; 9) through hinging means (14, 14A, 14B; 15. 15A, 15B).

2. Closing device according to claim 1, wherein the device includes at least one means (16; 17) for ensuring the positioning of at least one rod (11, 11A, 11B) at a determined distance from a plate (8; 9) corresponding to at least the thickness of one or several other rods.

3. Closing device according to claim 2, wherein the means (16; 17) for positioning a rod (11, 11A, 11B) with respect to a plate (8; 9) constitutes, at least partially, means (14; 15) for hinging such a rod (11, 11A, 11B) on this plate (8; 9).

4. Closing device according to any of claims 2 or 3, wherein a positioning means (16; 17) is formed by a pin or the like, mounted in a hinged way on a plate (8; 9) and/or on which the end (12; 13) of a rod (11, 11A, 11B) is mounted in a hinged way.

5. Closing device according to any of the preceding claims, wherein at least part of the rods (11, 11A, 11B) include at least one recess (18; 19) for receiving means for positioning (16; 17) another rod (11, 11A, 11B) with respect to a plate (8; 9), in an extreme position of rotation of a plate (8; 9) in which the means for positioning (16; 17) a rod (11, 11A, 11B) abuts against another rod (11, 11A, 11B).

6. Closing device according to any of the preceding claims, wherein the means (14; 15) for hinging the rods (11) on a plate (8; 9) are installed, at the level of this plate (8; 9), evenly, namely equiangularly with respect to the axis (3; 5) of pivoting of such a plate (8; 9).

7. Closing device according to claim 6, wherein the hinging means (14; 15) of a transmission system (1) with three rods (11, 11A, 11B) are installed, at the level of a plate (8; 9), at 120° from each other with respect to the axis of pivoting (3; 5) of such a plate (8; 9).

8. Closing device according to any of the preceding claims, wherein the plates (8; 9) are arranged on both sides of all the planes in which the rods (11, 11A, 11B) extend.

9. Closing device, including :
- a leaf (24) or the like rotationally mounted on a support, namely a masonry (23) or the like ;
- a motor (7) for controlling the opening and/or closing of such a leaf or the like, this motor (7) including a rotor (6) constituting a first object (2) ;
- a second object (4) constituted by the leaf (24) or the like, even by an element associated to same;
- a transmission device (20) designed to rotationally drive said leaf (24) or the like and to transmit a rotational movement of the first object (2) about a first axis (3) to the second object (4) about a second axis (5), parallel to said first axis (3) ;
wherein :
- the transmission device (20) includes at least a first (1) and a second (1') transmission system arranged in series and the first transmission system (1) of which is designed to engage with said first object (2) and to drive the second transmission system (1'), which is itself designed to engage with said second object (4) and to drive the latter ;
- these transmission systems (1; 1') each include, on the one hand, two plates pivoting (8, 9; 8', 9') according to two parallel axes (3, 3'; 3', 5) and one (8; 9') of which engages with an object (2; 4) while the other one (9; 8') engages with a plate (8'; 9) of the other transmission system (1'; 1), and, on the other hand, at least two rods (11; 11') each end of which is mounted in a hinged way on a plate (8, 9; 8', 9') of a transmission system (1; 1') through hinging means (14, 15; 14', 15').

10. Closing device (20) with a transmission device according to claim 9, wherein the rods (11; 11') of at least one of the transmission systems (1; 1') extend in planes parallel to each other and perpendicular to the axes of pivoting (3, 3'; 3', 5) of the plates (8, 9; 8', 9') of this transmission system (1, 1').

11. Closing device (20) with a transmission device according to any of claims 9 or 10, wherein the device includes at least one means (16, 17; 16', 17') for ensuring the positioning of at least one rod (11; 11') of at least one transmission system (1; 1') at a determined distance from at least one plate (8, 9; 8', 9') of this system (1; 1'), in a direction perpendicular to the surface of such a plate (8, 9; 8'. 9'), this distance corresponding to at least the thickness of one or several other rods of this transmission system (1; 1').

12. Closing device (20) with a transmission device according to claim 11, wherein the means for positioning (16, 17; 16', 17') a rod (11; 11') with respect to a plate (8, 9; 8', 9') constitutes, at least partially, means for hinging (14, 15 ; 14', 15') such a rod (11; 11') on this plate (8, 9; 8', 9').

13. Closing device (20) with a transmission device according to any of claims 11 or 12, wherein a positioning means (16, 17; 16', 17') is formed by a pin or the like, mounted in a hinged way on a plate (8, 9; 8', 9') and/or on which the end of a rod (11, 11') is mounted in a hinged way.

14. Closing device (20) with a transmission device according to any of claims 11 to 13, wherein at least part of the rods (11; 11') of at least one transmission system (1; 1') include at least one recess (18, 19; 18', 19') for receiving positioning means (16, 17; 16', 17'), in an extreme position of rotation of a plate (8, 9; 8', 9') in which the means for positioning (16, 17; 16', 17') a rod (11, 11') abuts against another rod.

15. Closing device (20) with a transmission device according to any of claims 9 to 14, wherein for at least one transmission system (1; 1') the means for hinging (14, 15 ; 14', 15') the rods (11; 11') on a plate (8, 9; 8', 9') are installed, at the level of this plate (8, 9; 8', 9'), in a regular way, namely equiangularly with respect to the axis of pivoting (3, 3'; 3', 5) of such a plate (8, 9; 8', 9').

16. Closing device (20) with a transmission device according to any of claims 9 to 15, wherein at least one of the transmission systems (1; 1') includes three rods (11; 11') extending in three different planes parallel to each other and perpendicular to the axes of pivoting (3, 3'; 3', 5) of the plates (8, 9; 8', 9') of such a transmission system (1; 1').

17. Closing device (20) with a transmission device according to any of claims 9 to 16, wherein the plates (8, 9; 8', 9') of at least one transmission system (1; 1') are arranged on both sides of all the planes in which the rods (11, 11') of such a transmission system (1; 1') are arranged.

## Patentansprüche

1. Schliessvorrichtung, umfassend :
- einen Flügel (24) oder dergleichen, der drehbar an einem Träger, nämlich einem Mauerwerk (23) oder dergleichen, gelagert ist ;
- einen Motor (7) zur Steuerung der Öffnung und/oder Schließung eines derartigen Flügels oder dergleichen, wobei dieser Motor (7) einen Rotor (6) umfasst, der einen ersten Gegenstand (2) bildet ;
- einen zweiten Gegenstand (4), der aus dem Flügel (24) oder dergleichen, sogar aus einem demselben zugeordneten Element besteht ;
- ein Übertragungssystem (1), vorgesehen, um den besagten Flügel (24) oder dergleichen in Drehung anzutreiben und um eine Drehbewegung des ersten Gegenstands (2) um eine erste Achse (3) auf einen zweiten Gegenstand (4) um eine zweite, zur besagten ersten Achse (3) parallele Achse (5) zu übertragen ;
**dadurch gekennzeichnet, dass** das Übertragungssystem (1) einerseits ein erstes Plättchen (8), das um die besagte erste Achse (3) schwenkt und vorgesehen ist, um mit dem besagten ersten Gegenstand (2) im Eingriff zu stehen, andererseits ein zweites Plättchen (9), das um die besagte zweite Achse (5) schwenkt und vorgesehen ist, um mit dem besagten zweiten Gegenstand (4) im Eingriff zu stehen, wieder andererseits wenigstens drei Stangen (11, 11A, 11B) umfasst, die sich in drei unterschiedlichen Ebenen erstrecken, die parallel zu einander und senkrecht zu den Schwenkachsen (3; 5) der Plättchen (8; 9) sind, und dass jedes der Enden (12, 12A, 12B; 13, 13A, 13B) dieser Stangen (11, 11A, 11B) über Gelenkmittel (14, 14A, 14B; 15. 15A, 15B) fest mit einem Plättchen (8; 9) verbunden ist.

2. Schliessvorrichtung nach Anspruch 1, **dadurch gekennzeichnet, dass** sie wenigstens ein Mittel (16; 17) umfasst, um die Positionierung von wenigstens einer Stange (11, 11A, 11B) auf einem bestimmten Abstand zu einem Plättchen (8; 9) zu sichern, der wenigstens der Dicke von einer oder mehreren anderen Stangen entspricht.

3. Schliessvorrichtung nach Anspruch 2, **dadurch gekennzeichnet, dass** die Mittel (16; 17) zum Positionieren einer Stange (11, 11A, 11B) bezüglich eines Plättchens (8; 9) wenigstens teilweise Mittel (14; 15) zur gelenkigen Verbindung einer solchen Stange (11, 11A, 11B) mit diesem Plättchen (8; 9) bilden.

4. Schliessvorrichtung nach irgendeinem der Ansprüche 2 oder 3, **dadurch gekennzeichnet, dass** ein Positionierungsmittel (16; 17) aus einem Stift oder dergleichen besteht, der gelenkig an einem Plättchen (8; 9) gelagert ist und/oder an dem das Ende (12; 13) einer Stange (11, 11A, 11B) gelenkig gelagert ist.

5. Schliessvorrichtung nach irgendeinem der vorgehenden Ansprüche, **dadurch gekennzeichnet, dass** wenigstens ein Teil der Stangen (11, 11A, 11B) wenigstens eine Aussparung (18; 19) zum Aufnehmen von Mitteln zum Positionieren (16; 17) einer anderen Stange (11, 11A, 11B) bezüglich eines Plättchens (8; 9), und zwar in einer äußersten Position der Drehung eines Plättchens (8; 9), in der die Mittel zum Positionieren (16; 17) einer Stange (11, 11A, 11B) gegen eine andere Stange (11, 11A, 11B) anschlagen.

6. Schliessvorrichtung nach irgendeinem der vorgehenden Ansprüche, **dadurch gekennzeichnet, dass** die Mittel (14; 15) zum gelenkigen Verbinden der Stangen (11) mit dem Plättchen (8; 9) im Bereich dieses Plättchens (8; 9) gleichmäßig, nämlich gleichwinklig bezüglich der Schwenkachse (3; 5) eines solchen Plättchens (8; 9) angebracht sind.

7. Schliessvorrichtung nach Anspruch 6, **dadurch gekennzeichnet, dass** die Mittel zum gelenkigen Verbinden (14; 15) eines Übertragungssystems (1) mit drei Stangen (11, 11A, 11B) im Bereich eines Plättchens (8; 9) in einem Abstand von 120° zu einander bezüglich der Schwenkachse (3; 5) eines solchen Plättchens (8; 9) angebracht sind.

8. Schliessvorrichtung nach irgendeinem der vorgehenden Ansprüche, **dadurch gekennzeichnet, dass** die Plättchen (8; 9) beiderseits sämtlicher Ebenen, in denen sich die Stangen (11, 11A, 11B) erstrecken, angeordnet sind.

9. Schliessvorrichtung, umfassend :
- einen Flügel (24) oder dergleichen, der drehbar an einem Träger, nämlich einem Mauerwerk (23) oder dergleichen, gelagert ist ;
- einen Motor (7) zur Steuerung der Öffnung und/oder Schließung eines derartigen Flügels oder dergleichen, wobei dieser Motor (7) einen Rotor (6) umfasst, der einen ersten Gegenstand (2) bildet;
- einen zweiten Gegenstand (4), der aus dem Flügel (24) oder dergleichen, sogar aus einem demselben zugeordneten Element besteht;
- eine Übertragungsvorrichtung (20), vorgesehen, um den besagten Flügel (24) oder dergleichen in Drehung anzutreiben und um eine Drehbewegung des ersten Gegenstands (2) um eine erste Achse (3) auf einen zweiten Gegenstand (4) um eine zweite, zur besagten ersten Achse (3) parallele Achse (5) zu übertragen ;
**dadurch gekennzeichnet, dass** :
- die Übertragungsvorrichtung (20) wenigstens ein erstes (1) und ein zweites (1') Übertragungssystem umfasst, die seriell angeordnet sind und von denen das erste Übertragungssystem (1) vorgesehen ist, um mit dem besagten ersten Gegenstand (2) im Eingriff zu stehen und um das zweite Übertragungssystem (1') anzutreiben, das widerum vorgesehen ist, um mit dem besagten zweiten Gegenstand (4) im Eingriff zu stehen und um das letztere anzutreiben ;
- diese Übertragungssysteme (1; 1') jeweils, einerseits, zwei Schwenkplättchen (8, 9; 8', 9') um zwei parallele Achsen (3, 3'; 3', 5) umfassen, von denen das eine (8; 9') mit einem Gegfenstand (2; 4) im Eingriff steht, während das andere (9; 8') mit einem Plättchen (8'; 9) des anderen Übertragungssystems (1'; 1) im Eingriff steht, und, andererseits, wenigstens zwei Stangen (11; 11'), von denen jedes Ende über Gelenkmittel (14, 15; 14', 15') gelenkig an einem Plättchen (8, 9; 8', 9') eines Übertragungssystems (1; 1') gelagert ist.

10. Schliessvorrichtung (20) mit einer Übertragungsvorrichtung nach Anspruch 9, daduch **gekennzeichnet**, dass sich die Stangen (11; 11') von wenigstens einem der Übertragungssysteme (1; 1') in Ebenen erstrecken, die parallel zu einander und senkrecht zu den Schwenkachsen (3, 3'; 3', 5) der Plättchen (8, 9; 8', 9') dieses Übertragungssystems (1, 1') sind.

11. Schliessvorrichtung (20) mit einer Übertragungsvorrichtung nach irgendeinem der Ansprüche 9 oder 10, daduch **gekennzeichnet**, dass sie wenigstens ein Mittel (16, 17; 16', 17') umfasst, um die Positionierung von wenigstens einer Stange (11; 11') von wenigstens einem Übertragungssystem (1; 1') auf einem bestimmten Abstand zu wenigstens einem Plättchen (8, 9; 8', 9') dieses Systems (1; 1') zu sichern, und zwar in einer zur Oberfläche eines solchen Plättchens (8, 9; 8'. 9') senkrechten Richtung, wobei dieser Abstand wenigstens der Dicke von einer oder mehreren anderen Stangen dieses Übertragungssystems (1; 1') entspricht.

12. Schliessvorrichtung (20) mit einer Übertragungsvorrichtung nach Anspruch 11, daduch **gekennzeichnet**, dass die Mittel zum Positionieren (16, 17; 16', 17') einer Stange (11; 11') bezüglich eines Plättchens (8, 9; 8', 9') wenigstens teilweise Mittel zum gelenkigen Verbimdung (14, 15 ; 14', 15') einer solchen Stange (11; 11') mit diesem Plättchen (8, 9; 8', 9') bilden.

13. Schliessvorrichtung (20) mit einer Übertragungsvorrichtung nach irgendeinem der Ansprüche 11 oder 12, daduch **gekennzeichnet**, dass ein Positionierungsmittel (16, 17; 16', 17') aus einem Stift oder dergleichen besteht, der gelenkig an einem Plättchen (8, 9; 8', 9') gelagert ist und/oder an dem das Ende (12; 13) einer Stange (11, 11') gelenkig gelagert ist.

14. Schliessvorrichtung (20) mit einer Übertragungsvorrichtung nach irgendeinem der Ansprüche 11 bis 13, daduch **gekennzeichnet**, dass wenigstens ein Teil der Stangen (11; 11') von wenigstens einem Übertragungssystem (1; 1') wenigstens eine Aussparung (18, 19; 18', 19') zum Aufnehmen von Positionierungsmitteln (16, 17; 16', 17') umfassen, und zwar in einer äußersten Position der Drehung eines Plättchens (8, 9; 8', 9'), in der die Mittel zum Positionieren (16, 17; 16', 17') einer Stange (11, 11') gegen eine andere Stange anschlagen.

15. Schliessvorrichtung (20) mit einer Übertragungsvorrichtung nach irgendeinem der Ansprüche 9 bis 14, daduch **gekennzeichnet**, dass für wenigstens ein Übertragungssystem (1; 1') die Mittel zum gelenkigen Verbinden (14, 15 ; 14', 15') der Stangen (11; 11') mit einem Plättchen (8, 9; 8', 9') im Bereich dieses Plättchens (8, 9; 8', 9') gleichmäßig, nämlich gleichwinklig bezüglich der Schwenkachse (3, 3'; 3', 5) eines solchen Plättchens (8, 9; 8', 9') angebracht sind.

16. Schliessvorrichtung (20) mit einer Übertragungsvorrichtung nach irgendeinem der Ansprüche 9 bis 15, daduch **gekennzeichnet**, dass wenigstens eines der Übertragungssysteme (1; 1') drei Stangen (11; 11') umfasst, die sich in drei verschiedenen Ebenen erstrecken, die parallel zu einander und senkrecht zu den Schwenkachsen (3, 3'; 3', 5) der Plättchen (8, 9; 8', 9') eines solchen Übertragungssystems (1; 1') sind.

17. Schliessvorrichtung (20) mit einer Übertragungsvorrichtung nach irgendeinem der Ansprüche 9 bis 16, daduch **gekennzeichnet**, dass die Plättchen (8, 9; 8', 9') von wenigstens einem Übertragungssystem (1;1') beiderseits sämtlicher Ebene angeordnet sind, in denen die Stangen (11, 11') eines solchen Übertragungssystems (1; 1') angeordnet sind.
